# EUROPEAN PATENT APPLICATION

(11) **EP 4 424 405 A1**
(43) Date of publication of application: **04.09.2024**
(21) Application number: 22886648.9
(22) Date of filing: 07.10.2022
(51) Int. Cl.: B01D 53/14, B01J 20/22, C08K 3/36, C08L 91/00

(54) **OXYGEN SCAVENGER**

(30) Priority: 25.10.2021 JP 2021173997
(71) Applicant: MITSUBISHI GAS CHEMICAL COMPANY, INC., Chiyoda-ku Tokyo 100-8324 (JP)
(72) Inventor: HATAKEYAMA, Hidetoshi, Tokyo 101-0062 (JP); SASAKI, Kazuhisa, Tokyo 101-0062 (JP)
(74) Representative: Hoffmann Eitle
(86) International application number: PCT/JP2022/037607
(87) International publication number: WO 2023/074317

(57) **Abstract**

An oxygen scavenger comprising synthetic amorphous silica impregnated with a drying oil and an oil-soluble metal catalyst.

## Description

### Technical Field

The present invention relates to an oxygen scavenger.

### Background Art

A method of using an oxygen scavenger is known as a storage technique for food products, pharmaceutical products, and the like. In this method, a stored article and an oxygen scavenger are enclosed and sealed in a sealed container having gas-barrier properties, thereby allowing the oxygen scavenger to absorb oxygen inside the sealed container. Thus, an atmosphere in the sealed container can be kept substantially in an oxygen-free state. As a function, the oxygen scavenger is preferably small in size and able to absorb large amounts of oxygen. In other words, an oxygen scavenger composition with a large amount of oxygen absorption per unit volume is preferred.

Exemplary oxygen scavengers include: iron-based oxygen scavengers that include iron (iron powder) as their main agent; and non-iron-based oxygen scavengers that include ascorbic acid, glycerin, and the like as their main agents. The oxygen scavenger listed here requires moisture for reactions.

On the other hand, in the storage of products such as pharmaceutical products and freeze-dried foods which should avoid contact with moisture as much as possible during storage, an oxygen scavenger that does not require moisture in oxygen absorption is required, and as such an oxygen scavenger, an oxygen scavenger containing a compound having an unsaturated bond such as unsaturated hydrocarbons, unsaturated fatty acids, and fats and/or oils as a main agent is known.

Such oxygen scavengers that do not require moisture can be used in the storage of not only pharmaceutical products and foods, but also metallic components, electronic components, electrical components, precision components, magnetic and optical components, jewelry, aircrafts, automobiles, glass, rubber products, photographic films, pressed flowers, paintings, ancient documents, excavated artifacts, and the like.

For example, Patent Document 1 discloses, as an oxygen scavenger that absorbs water vapor and stably absorbs oxygen, an oxygen scavenger composition absorbing water vapor in which a liquid mixture of an aliphatic compound having an unsaturated group and a metal salt of a transition metal is mixed with a solid such as calcium oxide.

### Citation List

### Patent Document

Patent Document 1: JP 2002-035579 A

### Summary of Invention

### Technical Problem

Patent Document 1 discloses an oxygen scavenger that absorbs water vapor without requiring moisture. However, some of the products listed above do not like to dry out. In particular, foods and pharmaceutical products may have an issue in that they can dry out and change quality in the vicinity of oxygen scavengers, and thus an oxygen scavenger that can be used under any humidity is desired.

In addition, some of the above-described oxygen scavengers absorb or generate carbon dioxide gas during the oxygen absorption reaction, which changes the pH in products and deteriorates the quality of the products.

For this reason, there has been a demand for an oxygen scavenger that absorbs oxygen without being affected by the water vapor concentration in a product and suppresses change in carbon dioxide gas concentration in the product.

Therefore, issues to be solved by the present invention are to provide an oxygen scavenger capable of absorbing oxygen without being affected by moisture in a product package with little change in carbon dioxide gas concentration in the product package at the time of oxygen absorption, and further capable of suppressing generation of odor.

### Solution to Problem

The inventors of the present invention have found that an oxygen scavenger obtained by impregnating synthetic amorphous silica with a drying oil and an oil-soluble metal catalyst can solve the above issues.

The present invention relates to the following oxygen scavenger, oxygen scavenger package, and method of storing a pharmaceutical product.
<1> An oxygen scavenger comprising synthetic amorphous silica impregnated with a drying oil and an oil-soluble metal catalyst.
<2> The oxygen scavenger according to <1>, in which the synthetic amorphous silica is precipitation-process wet silica.
<3> The oxygen scavenger according to <1> or <2>, in which the drying oil is at least one selected from the group consisting of linseed oil and grape seed oil.
<4> The oxygen scavenger according to any one of <1> to <3>, in which the oil-soluble metal catalyst is at least one selected from the group consisting of an organic acid salt of manganese and an organic acid salt of iron.
<5> The oxygen scavenger according to any one of <1> to <4>, in which a particle size of the synthetic amorphous silica is from 0.1 to 0.6 mm.
<6> The oxygen scavenger according to any one of <1> to <5>, in which an apparent density of the synthetic amorphous silica is 0.5 g/mL or less.
<7> The oxygen scavenger according to any one of <1> to <6>, in which a mass ratio of the drying oil to the synthetic amorphous silica [drying oil/synthetic amorphous silica] is from 50/50 to 70/30.
<8> The oxygen scavenger according to any one of <1> to <7>, which does not contain inorganic salts.
<9> An oxygen scavenger package comprising the oxygen scavenger described in any one of <1> to <8> and an air-permeable packaging material containing the oxygen scavenger.
<10> A method of storing a pharmaceutical product, the method including storing a pharmaceutical product sensitive to a change in moisture or carbon dioxide gas by using the oxygen scavenger described in any one of <1> to <8>.

### Advantageous Effects of Invention

The present invention can provide an oxygen scavenger capable of absorbing oxygen without being affected by moisture in a product package with little change in carbon dioxide gas concentration in the product package at the time of oxygen absorption, and further capable of suppressing generation of odor. Thus, the oxygen scavenger can be used not only for storage of a wide variety of products but also for storage of products such as pharmaceutical products which are particularly susceptible to changes in storage environment.

### Description of Embodiments

An embodiment according to the present invention will be described below. The content of the present invention is not limited to the embodiment described below.

Note that in the present specification, a phrase of "A to B" indicating a numerical range means "greater than or equal to A and less than or equal to B" (in the case of A < B), or "less than or equal to A and greater than or equal to B" (in the case of A > B). Furthermore, in the present invention, a combination of preferable aspects is a more preferable aspect.

### Oxygen scavenger

The oxygen scavenger of the present invention comprises synthetic amorphous silica impregnated with a drying oil and an oil-soluble metal catalyst.

### (Drying oil)

The oxygen scavenger of the present invention contains a drying oil. The drying oil is impregnated into synthetic amorphous silica together with an oil-soluble metal catalyst which is described later.

The drying oil is an oil that slowly undergoes natural oxidation and hardens in the air, and the iodine value of the drying oil used in the oxygen scavenger of the present invention is preferably 100 or more, more preferably 130 or more, and still more preferably 150 or more. The upper limit is not limited, but is preferably 250 or less, and more preferably 200 or less. Specifically, the iodine value is preferably from 100 to 250, more preferably from 130 to 250, and still more preferably from 150 to 200. The iodine value is a value determined by The JOCS Standard Methods for the Analysis of Fats, Oils and Related Materials.

The drying oil used in the oxygen scavenger of the present invention is preferably a vegetable oil, more preferably an edible oil. Edible oils are preferred because they are readily available and highly safe.

Specific examples of the drying oil used in the oxygen scavenger of the present invention include linseed oil, grape seed oil, soybean oil, wheat germ oil, tung oil, perilla oil, walnut oil, safflower oil, and sunflower oil. The drying oil is preferably at least one selected from the group consisting of linseed oil, grape seed oil, soybean oil, wheat germ oil, and tung oil, more preferably at least one selected from the group consisting of linseed oil and grape seed oil, and further preferably linseed oil from the viewpoint of high reactivity and low odor.

The content of the drying oil may be set to an optimum amount depending on the amount that can be impregnated into synthetic amorphous silica that is described later and the required oxygen absorbing ability, but is preferably from 10 to 90 mass%, more preferably from 30 to 80 mass%, and still more preferably from 50 to 70 mass% in the oxygen scavenger.

### (Oil-soluble metal catalyst)

The oxygen scavenger of the present invention contains an oil-soluble metal catalyst. The oil-soluble metal catalyst is impregnated into the synthetic amorphous silica together with the drying oil.

In particular, the effect of the oil-soluble metal catalyst is remarkable for the drying oil impregnated in the synthetic amorphous silica, and the oxygen scavenger of the present invention can exhibit a high oxygen absorption rate.

Examples of the oil-soluble metal catalyst used in the oxygen scavenger of the present invention include a transition metal salt that promotes oxidation of the drying oil.

The transition metal salt is preferably at least one transition metal salt selected from the group consisting of Cu, Fe, Co, Ni, Cr, and Mn, and is more preferably at least one transition metal salt selected from the group consisting of Mn (manganese) and Fe (iron) in consideration of oxygen absorption performance and safety.

As the transition metal salt, for example, an organic salt such as an organic acid salt or an acetylacetone metal salt can be suitably used. From the viewpoint of compatibility with the drying oil, the transition metal salt is preferably an organic acid salt.

Examples of the organic acid salt include naphthenic acid salts, tall oil fatty acid salts, and fulvic acid salts. Of these, naphthenic acid salts and tall oil fatty acid salts are preferable.

As described above, the oil-soluble metal catalyst is preferably at least one selected from the group consisting of organic acid salts of manganese and organic acid salts of iron, and more preferably organic acid salts of manganese.

The oil-soluble metal catalyst is more preferably contained in the oxygen scavenger in a state of being uniformly mixed with the drying oil.

The oil-soluble metal catalyst may be used by dissolving or dispersing it in a diluent for uniform mixing with the drying oil.

Examples of the diluent for diluting such an oil-soluble metal catalyst include petroleum-based solvents and fats and/or oils.

A diluent having a low viscosity is preferable because it is easy to be mixed.

The content of the oil-soluble metal catalyst in the oxygen scavenger is preferably from 0.001 to 1.5 mass%, more preferably from 0.01 to 1.5 mass%, still more preferably from 0.1 to 1.2 mass%, and further still more preferably from 0.3 to 1.0 mass%.

The amount of the oil-soluble metal catalyst with respect to 100 parts by mass of the drying oil in the oxygen scavenger is preferably from 0.01 to 2.0 parts by mass, more preferably from 0.05 to 1.0 parts by mass, and still more preferably from 0.1 to 0.5 parts by mass in terms of the amount of metal. Using the oil-soluble metal catalyst in the above range makes it possible to shorten the induction period until the start of oxygen absorption.

When a diluent is used, the concentration of the oil-soluble metal catalyst in the solution containing the diluent is preferably from 1 to 80 mass%, more preferably from 5 to 70 mass%, and still more preferably from 20 to 60 mass%.

### (Synthetic amorphous silica)

The oxygen scavenger of the present invention contains synthetic amorphous silica. The synthetic amorphous silica is impregnated with a drying oil and an oil-soluble metal catalyst and functions as a so-called carrier.

Using synthetic amorphous silica as a carrier can increase the oxidation rate of the drying oil.

The synthetic amorphous silica preferably has a large surface area and expands the contact area between the drying oil and oxygen. In addition, the apparent density is preferably small because the drying oil and the oil-soluble metal catalyst can be supported in a large amount.

Synthetic amorphous silica is generally classified according to its production method, and examples of preferable synthetic amorphous silica to be contained in the oxygen scavenger of the present invention include wet-process silica and dry-process silica, and wet-process silica is preferable.

Examples of the wet-process silica include precipitation-process wet silica and gel-process wet silica, and precipitation-process wet silica is preferable.

Examples of the dry-process silica include combustion-process silica and arc-process silica.

That is, the synthetic amorphous silica used in the present invention is preferably at least one selected from the group consisting of precipitation-process wet silica, gel-process wet silica, combustion-process silica, and arc-process silica, more preferably at least one selected from the group consisting of precipitation-process wet silica and gel-process wet silica, and still more preferably precipitation-process wet silica.

The particle size of the synthetic amorphous silica is measured by sieving, and preferably the synthetic amorphous silica with the size from 0.1 to 2.0 mm accounts for 70 mass% or more, and more preferably the synthetic amorphous silica with the size from 0.1 to 0.5 mm accounts for 70 mass% or more. More specifically, the particle size of the synthetic amorphous silica is preferably from 0.1 to 1.0 mm, and more preferably from 0.1 to 0.6 mm. When the particle size is in this range, fluidity can be appropriately maintained even after impregnation with the drying oil, and filling can be smoothly performed by a filling and packaging machine or the like, which is preferable also from the viewpoint of production. The particle size is a value determined by sieving.

The apparent density of the synthetic amorphous silica is preferably 1.0 g/mL or less, more preferably 0.5 g/mL or less, and still more preferably from 0.2 to 0.5 g/mL. The apparent density is a value determined by a method in accordance with JIS K 6720-2:1999.

The content of the synthetic amorphous silica is preferably from 10 to 90 mass%, more preferably from 20 to 70 mass%, and still more preferably from 30 to 50 mass% in the oxygen scavenger from the viewpoint of maintaining fluidity and exhibiting high oxygen absorbing ability.

The mass ratio of the drying oil to the synthetic amorphous silica [drying oil/synthetic amorphous silica] is preferably from 10/90 to 90/10, more preferably from 30/70 to 80/20, and still more preferably from 50/50 to 70/30.

### (Other components)

The oxygen scavenger of the present invention contains the drying oil, the oil-soluble metal catalyst, and the synthetic amorphous silica. The oxygen scavenger of the present invention sufficiently exhibits the effect of the present invention even with only the drying oil, the oil-soluble metal catalyst, and the synthetic amorphous silica. Since the oxygen scavenger of the present invention absorbs oxygen without being affected by moisture with little change in carbon dioxide gas concentration at the time of oxygen absorption, it can be used in various applications, but depending on the product to be packaged, the storage state can be further improved by increasing or suppressing the moisture content or carbon dioxide gas concentration. Other components may be contained depending on the application accordingly.

Examples of the other components include a gas adsorbent and a moisture absorbent. For example, in order to remove the stuffy smell of food, a gas adsorbent suitable for the generated gas may be added.

The gas adsorbent referred to herein mainly adsorbs gases other than oxygen. Examples of the gas other than oxygen include carbon monoxide, carbon dioxide, hydrocarbons, aldehydes, ketones, carboxylic acids, hydrogen sulfide, and ammonia.

Examples of the gas adsorbent include activated carbon, synthetic zeolite, natural zeolite, clay minerals, silica gel, magnesium silicate, aluminum silicate, ascarite, oxides of alkaline earth metal, hydroxides, aluminum oxides, polymer adsorbents, sodium sulfate, sodium carbonate, potassium carbonate, soda lime, organic acid salt, and organic amines.

Examples of the activated carbon include wood activated carbon, coconut shell activated carbon, and coal activated carbon, and in view of the shape, examples of the activated carbon include granular activated carbon and powdery activated carbon.

Examples of the synthetic zeolite include molecular sieves.

Examples of the natural zeolite include mordenite, clinoptilolite, and erionite.

Examples of the clay mineral include acid clay and activated clay.

Examples of the oxides of alkaline earth metal include calcium oxide, barium oxide, and magnesium oxide.

Examples of the hydroxides include alkaline earth metal hydroxides sodium hydroxide, potassium hydroxide, and slaked lime.

The gas adsorbent is not necessarily a single substance, and it may be a mixture of two or more types.

The oxygen scavenger of the present invention preferably does not contain an inorganic salt(s) from the viewpoint of preventing partial drying or wetting of the product. Since inorganic salts have a property of giving and receiving moisture in the product, it is preferable not to contain inorganic salts from the above viewpoint. The oxygen scavenger of the present invention does not require an inorganic salt for the oxygen absorption reaction. Therefore, by virtue of not containing an inorganic salt, the oxygen scavenger of the present invention can sufficiently exert the effect of absorbing oxygen without being affected by moisture in the product package and suppressing change in carbon dioxide gas concentration in the product package at the time of oxygen absorption while suppressing partial drying and wetting of the product.

### [Method of Producing Oxygen Scavenger]

The method of producing the oxygen scavenger of the present invention is not particularly limited, but is preferably a production method in which synthetic amorphous silica is impregnated with a mixture of a drying oil and an oil-soluble metal catalyst to produce an oxygen scavenger. When other components are added, it is preferable to use a production method in which synthetic amorphous silica is impregnated with a mixture of a drying oil and an oil-soluble metal catalyst, and then the other components are mixed to produce an oxygen scavenger.

By preparing a mixture of the drying oil and the oil-soluble metal catalyst first and then impregnating the mixture into the synthetic amorphous silica, the oil-soluble metal catalyst can be uniformly mixed with the drying oil, and a high oxygen absorption rate can be obtained.

The device used for mixing is not particularly limited, and specific examples that can be used include a Nauta mixer (available from Hosokawa Micron Corporation), a conical mixer (available from Ohno Chemical Machinery Co., Ltd.), a vertical granulator (available from Powrex Corp.), and a high speed mixer (available from EarthTechnica Co., Ltd.).

### [Oxygen Scavenger Package]

An oxygen scavenger package of the present invention includes the oxygen scavenger described above and an air-permeable packaging material containing the oxygen scavenger.

### (Packaging Material)

For the packaging material, a bag-shaped packaging material using an air-permeable packaging material as a whole or a part thereof, a cylindrical drum-shaped or box-shaped container formed of paper or resin and provided with fine holes in a part thereof, or a known packaging material using an air-permeable packaging material is used.

Examples of the bag-shaped packaging material include a packaging material having a bag shape formed by bonding two sheets of an air-permeable packaging material to each other, a packaging material having a bag shape formed by bonding one sheet of an air-permeable packaging material and one sheet of a non-air-permeable packaging material to each other, and a packaging material having a bag shape formed by folding one sheet of an air-permeable packaging material and sealing edges of the folded sheet other than the folded portion. Here, when the air-permeable packaging material and the non-air-permeable packaging material each have a quadrilateral shape, examples of the packaging material include a packaging material having a bag shape formed by overlapping two sheets of an air-permeable packaging material and heat-sealing their four sides, a packaging material having a bag shape formed by overlapping one sheet of an air-permeable packaging material and one sheet of a non-air-permeable packaging material and heat-sealing their four sides, and a packaging material having a bag shape formed by folding one sheet of an air-permeable packaging material and heat-sealing its three sides other than the folded portion. Furthermore, the packaging material may be a packaging material having a bag shape formed by forming an air-permeable packaging material into a tubular shape and heat-sealing both ends and the trunk portion of the resulting tubular body.

The shape of the packaging material is preferably at least one selected from the group consisting of a bag shape, a three-sided seal shape, a four-sided seal shape, a stick shape, a cylindrical shape, and a box shape, and is more preferably at least one selected from the group consisting of a bag shape, a stick shape, a cylindrical shape, and a box shape.

### (Air-Permeable Packaging Material)

For the air-permeable packaging material, a packaging material through which oxygen permeates may be selected. Of these, a packaging material having an air permeability resistance measured by a Gurley tester method of preferably 40000 seconds or less, more preferably 20000 seconds or less is used. Here, the air permeability resistance refers to a value measured by a method in accordance with JIS P 8117 (1998). More specifically, it refers to a time period required for 100 mL of air to permeate through an air-permeable packaging material using a Gurley densometer available from Toyo Seiki Seisaku-sho, Ltd.

As the air-permeable packaging material, in addition to paper and nonwoven fabric, a plastic film, to which air permeability is imparted, is used. Examples of such a plastic film include a laminate film produced by laminating and bonding a film of polyethylene terephthalate, polyamide, polypropylene, polycarbonate, or the like, and a film of polyethylene, an ionomer, polybutadiene, ethylene acrylic acid copolymer, ethylene methacrylic acid copolymer, ethylene vinyl acetate copolymer, or the like as a sealing layer. These laminates can also be used as the air-permeable packaging material.

As the method of imparting air permeability, various methods can be employed, in addition to punching with a cold needle or a heat needle. When air permeability is imparted by punching, the air permeability can be freely adjusted by a diameter, the number, a material, and the like of holes to be punched.

The thickness of the laminated film is preferably 50 to 300 µm, and particularly preferably 60 to 250 µm. In this case, as compared to a case where the thickness deviates from the range described above, the packaging material can be a packaging material that retains strength and has an excellent heat sealing property and packaging suitability.

### [Method of Storing Pharmaceutical Product]

Since the oxygen scavenger is capable of absorbing oxygen without being affected by moisture in a product package with little change in carbon dioxide gas concentration in the product package at the time of oxygen absorption and is further capable of suppressing generation of odor, the oxygen scavenger can be used in a wide range of applications such as pharmaceutical products and foods, and is preferably used for storage of pharmaceutical products. That is, in a method of storing a pharmaceutical product according to the present invention, it is preferable to store a pharmaceutical product sensitive to a change in moisture or carbon dioxide gas by using the oxygen scavenger.

Pharmaceutical products generally dislike high humidity. Since the oxygen absorbing reaction of the oxygen scavenger is not affected by moisture, the oxygen scavenger can be preferably used for storage of pharmaceutical products sensitive to humidity during storage. In addition, since the reaction is not affected by moisture, the effect of deoxidization is not impaired even when a desiccant such as silica gel is used in combination. Further, since the oxygen scavenger can suppress generation of odor, it is preferably used for storage of oral preparations and patches.

The temperature during storage in the storage method of the present invention is preferably from 5 to 40°C.

The method of storing a pharmaceutical product according to the present invention also includes storing a pharmaceutical product sensitive to a change in carbon dioxide gas by using the oxygen scavenger.

Examples of the pharmaceutical product sensitive to a change in carbon dioxide gas include bicarbonate-containing infusions. The bicarbonate-containing infusion is a drug having a property of releasing carbon dioxide gas to lose its efficacy.

The bicarbonate-containing infusion is used as an extracellular fluid replenisher, and bicarbonate ions are used as an alkalizing agent to correct extracellular fluid.

The method of storing a pharmaceutical product of the present invention can be more suitably used for storing a pharmaceutical product sensitive to a change in moisture and carbon dioxide gas by using the oxygen scavenger.

In the storage method of the present invention, it is preferable that the pharmaceutical product and the oxygen scavenger are placed and stored in a package. The package is preferably made of a gas barrier material that hardly allows gas to pass therethrough. Specific examples of the gas barrier material include films of ethylene-vinyl alcohol copolymers, polyvinylidene chlorides, or MXD6 nylons, films of resins such as oriented polyethylene terephthalates, oriented nylons, or oriented polypropylenes on which silica, alumina, or the like is vapor-deposited, and laminated films having an aluminum foil layer.

### Examples

Hereinafter, the present embodiment will be described in detail using Examples and Comparative Examples, but the present embodiment can be modified as appropriate as long as the present embodiment achieves the effects of the present invention.

### [Various Measurements]

· Iodine value: a value determined by The JOCS Standard Methods for the Analysis of Fats, Oils and Related Materials
· Particle size: a value determined by sieving
· Apparent density: a value determined by a method in accordance with JIS K 6720-2:1999

### [Production of Oxygen Scavenger and Oxygen Scavenger Package]

### Example 1

### (Method of Producing Oxygen Scavenger)

A manganese naphthenate mineral spirit solution (manganese concentration: 6 mass%) as an oil-soluble metal catalyst was dissolved in 20 g of linseed oil (for food, iodine value: 180), which was a drying oil, in such a manner that the amount of manganese was 0.2 parts by mass with respect to 100 parts by mass of the linseed oil, and then the resulting solution was impregnated into 15 g of precipitation-process wet silica (white carbon, particle size: from 0.1 to 0.5 mm in an amount of 75 mass% or more, apparent density: 0.26 g/mL), which was synthetic amorphous silica, to produce an oxygen scavenger.

The amount of the above synthetic amorphous silica is the amount of the synthetic amorphous silica as the minimum amount of the carrier capable of achieving appropriate fluidity when tilted in a plastic bag after being impregnated with the drying oil, and this amount was defined as a necessary carrier amount.

### (Production of Oxygen Scavenger Package)

1.8g of the oxygen scavenger (corresponding to 1 g of linseed oil) was filled in a small bag of 60 mm × 70 mm made of an air-permeable packaging material in which a perforated plastic and paper were layered to produce an oxygen scavenger package.

### Example 2

An oxygen scavenger and an oxygen scavenger package were obtained in the same manner as in Example 1 except that the manganese naphthenate mineral spirit solution as an oil-soluble metal catalyst was changed to an iron naphthenate mineral spirit solution (iron concentration: 5 mass%). The iron naphthenate mineral spirit solution was added in such a way that the amount of iron was 0.2 parts by mass with respect to 100 parts by mass of linseed oil.

### Example 3

An oxygen scavenger and an oxygen scavenger package were obtained in the same manner as in Example 1 except that the manganese naphthenate mineral spirit solution as an oil-soluble metal catalyst was changed to a partial manganese salt solution of tall oil fatty acid (manganese concentration: 4 mass%). The tall oil fatty acid manganese solution was added in such a way that the amount of manganese was 0.2 parts by mass with respect to 100 parts by mass of linseed oil.

### Comparative Example 1

An oxygen scavenger and an oxygen scavenger package were obtained in the same manner as in Example 1 except that 15 g of the precipitation-process wet silica was changed to 28 g of granular diatomaceous earth (particle size: from 0.4 to 1.5 mm accounts for 90 mass% or more). When granular diatomaceous earth was used, the necessary carrier amount was 28 g with respect to 20 g of linseed oil. Thus, the amount of the oxygen scavenger used in the oxygen scavenger package was 2.4 g (corresponding to 1 g of linseed oil).

### Comparative Example 2

An oxygen scavenger and an oxygen scavenger package were obtained in the same manner as in Example 1 except that 15 g of the precipitation-process wet silica was changed to 15 g of granular activated carbon (particle size: from 0.2 to 0.5 mm in an amount of 90 mass% or more). When granular activated carbon was used, the necessary carrier amount was 15 g with respect to 20 g of linseed oil. Thus, the amount of the oxygen scavenger used in the oxygen scavenger package was 1.8 g (corresponding to 1 g of linseed oil).

### Comparative Example 3

An oxygen scavenger and an oxygen scavenger package were obtained in the same manner as in Example 1 except that the manganese naphthenate mineral spirit solution as an oil-soluble metal catalyst was not used.

### Comparative Example 4

An oxygen scavenger and an oxygen scavenger package were obtained in the same manner as in Comparative Example 1 except that the manganese naphthenate mineral spirit solution as an oil-soluble metal catalyst was not used.

### Comparative Example 5

An oxygen scavenger and an oxygen scavenger package were obtained in the same manner as in Comparative Example 2 except that the manganese naphthenate mineral spirit solution as an oil-soluble metal catalyst was not used.

### [Evaluation of Oxygen Scavenger and Oxygen Scavenger Package]

### <Deoxidation Performance Evaluation and Measurement of Carbon Dioxide Gas Concentration>

One oxygen scavenger package of each of Examples and Comparative Examples and 200 mL of air were sealed in a plastic bag (150 mm × 200 mm) made of a gas barrier film and stored in an environment of 25°C. The oxygen concentration in the bag was measured every day for 7 days using a gas chromatograph ("GC-2014" manufactured by Shimadzu Corporation), and the number of days (deoxidation days) when the oxygen concentration reached 0.1 % (volume) was determined. A smaller value of the deoxidation days indicates a superior deoxidation performance. The results are indicated in Table 1. In Comparative Examples 3 and 5, since the oxygen concentration did not reach 0.1% even after 7 days, the oxygen concentrations after 7 days were listed.

The carbon dioxide gas concentration in the bag after 7 days was measured using a gas chromatograph (the same as above). The results are indicated in Table 1.

### <Odor Evaluation>

After the completion of the deoxidation performance test, the oxygen scavenger packages of Examples and Comparative Examples were still continuously stored at 25°C in the plastic bag, the plastic bag was opened 10 days later, and one odor evaluation panelist smelled the odor in the bag and evaluated according to the following criteria. The results are indicated in Table 1.
A: weak odor that cannot be recognized as an oxidized odor
B: odor that can be recognized as an oxidized odor
C: strong oxidized odor

### [Table 1]

**Table 1**

| | Carrier | Oil-soluble metal catalyst | Evaluation results | | |
|---|---|---|---|---|---|
| | (Synthetic amorphous silica, etc.) | | Deoxidation days | Carbon dioxide gas concentration | Odor |
| Example 1 | Precipitation-process wet silica | Manganese naphthenate | 1 day | Less than 1% | A |
| Example 2 | Precipitation-process wet silica | Iron naphthenate | 2 days | Less than 1% | A |
| Example 3 | Precipitation-process wet silica | Tall oil fatty acid manganese | 1 day | Less than 1% | A |
| Comparative Example 1 | Granular diatomaceous earth | Manganese naphthenate | 1 day | Less than 1% | C |
| Comparative Example 2 | Granular activated carbon | Manganese naphthenate | 7 days | Less than 1% | B |
| Comparative Example 3 | Precipitation-process wet silica | - | 20% after 7 days | Less than 1% | A |
| Comparative Example 4 | Granular diatomaceous earth | - | 6 days | Less than 1% | C |
| Comparative Example 5 | Granular activated carbon | - | 10% after 7 days | Less than 1% | B |

As is clear from the results in Table 1, the oxygen scavengers of Examples exhibit excellent oxygen absorption performance without requiring moisture or generating carbon dioxide gas in the product package and can suppress the generation of odor.

### <Evaluation of Humidity Dependency of Deoxidation Performance and Measurement of Carbon Dioxide Gas Concentration>

One oxygen scavenger package of Example 1, 200 mL of air, and the moisture conditioning agent listed in Table 2 were sealed in a plastic bag (150 mm × 200 mm) made of a gas barrier film and stored in an environment of 25°C. The oxygen concentration in the bag was measured every day for 7 days using a gas chromatograph (same as above), and the number of days (deoxidation days) when the oxygen concentration reached 0.1% was determined. A smaller value of the deoxidation days indicates a superior deoxidation performance. The results are presented in Table 2.

In addition, the carbon dioxide gas concentration in the bag after 7 days was measured using a gas chromatograph. The results are presented in Table 2.

### [Table 2]

**Table 2**

| Example 1 | Moisture conditioning agent | Humidity in bag | Evaluation Results | |
|---|---|---|---|---|
| | | | Deoxidation days | Carbon dioxide gas concentration |
| Evaluation 1 | Silica gel (10 g) | 0 %RH | 1 day | Less than 1% |
| Evaluation 2 | Saturated calcium chloride solution (10 mL) | 35 %RH | 1 day | Less than 1% |
| Evaluation 3 | Saturated sodium chloride solution (10 mL) | 75 %RH | 1 day | Less than 1% |
| Evaluation 4 | Pure water (10 mL) | 100 %RH | 1 day | Less than 1% |

As can be seen from the results in Table 2, the oxygen scavengers of Examples do not generate carbon dioxide gas, and have excellent oxygen absorption performance, regardless of the amount of moisture in the system. In particular, in Evaluation 1, it can be seen that excellent oxygen absorption performance is provided without requiring moisture.

### <Evaluation of Change Amount of Carbon Dioxide Gas and Evaluation of Deoxidation Performance in Co-Presence of Carbon Dioxide Gas>

The oxygen scavenger package of Example 1 or commercially available oxygen scavengers (all for 500 mL of air, manufactured by Mitsubishi Gas Chemical Company, Inc.) indicated in Table 3, 500 mL of air (oxygen: 100 mL), and 50 mL of carbon dioxide gas were sealed in a plastic bag (180 mm × 250 mm) made of a gas barrier film and stored in an environment of 25°C. One plastic bag was filled with one oxygen scavenger package or one commercially available oxygen scavenger. After 5 days, the concentration of carbon dioxide gas in the bag was measured using a gas chromatograph to determine the amount of carbon dioxide gas after storage. Table 3 indicates the amount of carbon dioxide gas after storage and the amount of change in carbon dioxide gas before and after storage. The smaller the absolute value of the amount of change in carbon dioxide gas, the smaller the change in the concentration of carbon dioxide gas in the bag, which is preferable.

After 5 days of storage, the oxygen concentration in the bag was measured using a gas chromatograph (same as above) to determine the amount of residual oxygen. The smaller the residual oxygen amount, the more excellent the deoxidation performance. The results are presented in Table 3.

### [Table 3]

**Table 3**

| | Oxygen scavenger (package) | Main component, Type of oxygen scavenger | Evaluation Results | | |
|---|---|---|---|---|---|
| | | | Amount of carbon dioxide gas | Amount of change in carbon dioxide gas | Amount of residual oxygen |
| Example 1 | Example 1 | Linseed oil 1 g | 50 mL | 0 mL | Less than 1 mL |
| Comparative Example 6 | AGELESS S-100 | Iron powder-based self-reaction type | Less than 1 mL | -50 mL | Less than 1 mL |
| Comparative Example 7 | AGELESS GT-100 | Organic-based carbon dioxide gas generation self-reaction type | 140 mL | +90 mL | Less than 1 mL |
| Comparative Example 8 | AGELESS GLS-100 | Organic-based self-reaction type | Less than 1 mL | -50 mL | Less than 1 mL |

As can be seen from the results indicated in Table 3, the oxygen scavengers of Examples can keep concentration change of carbon dioxide gas in the product package small and have further excellent oxygen absorption performance.

## Claims

1. An oxygen scavenger comprising synthetic amorphous silica impregnated with a drying oil and an oil-soluble metal catalyst.

2. The oxygen scavenger according to claim 1, wherein the synthetic amorphous silica is precipitation-process wet silica.

3. The oxygen scavenger according to claim 1 or 2, wherein the drying oil is at least one selected from the group consisting of linseed oil and grape seed oil.

4. The oxygen scavenger according to any one of claims 1 to 3, wherein the oil-soluble metal catalyst is at least one selected from the group consisting of an organic acid salt of manganese and an organic acid salt of iron.

5. The oxygen scavenger according to any one of claims 1 to 4, wherein a particle size of the synthetic amorphous silica is from 0.1 to 0.6 mm.

6. The oxygen scavenger according to any one of claims 1 to 5, wherein an apparent density of the synthetic amorphous silica is 0.5 g/mL or less.

7. The oxygen scavenger according to any one of claims 1 to 6, wherein a mass ratio of the drying oil to the synthetic amorphous silica [drying oil/synthetic amorphous silica] is from 50/50 to 70/30.

8. The oxygen scavenger according to any one of claims 1 to 7, which does not contain inorganic salts.

9. An oxygen scavenger package comprising the oxygen scavenger described in any one of claims 1 to 8 and an air-permeable packaging material containing the oxygen scavenger.

10. A method of storing a pharmaceutical product, the method comprising storing a pharmaceutical product sensitive to a change in moisture or carbon dioxide gas by using the oxygen scavenger described in any one of claims 1 to 8.
